# EUROPÄISCHE PATENTSCHRIFT

(11) **EP 3 153 361 B1**
(45) Veröffentlichungstag und Bekanntmachung des Hinweises auf die Patenterteilung: **22.04.2020**
(21) Anmeldenummer: 16192429.5
(22) Anmeldetag: 05.10.2016
(51) Int. Cl.: B60S 1/48, F16K 11/00

(54) **VORRICHTUNG ZUR VERTEILUNG VON WASCHWASSER IN EINEM FAHRZEUG**
DEVICE FOR DISTRIBUTING WASH WATER IN A VEHICLE
DISPOSITIF DE RÉPARTITION D'EAU DE LAVAGE DANS UN VÉHICULE AUTOMOBILE

(30) Priorität: 05.10.2015 DE 102015116824
(43) Veröffentlichungstag der Anmeldung: 12.04.2017
(73) Patentinhaber: Helbako GmbH, 42579 Heiligenhaus (DE)
(72) Erfinder: SCHEID, Frank, 42699 Solingen (DE); LÖCKEN, Martin, 40882 Ratingen (DE); LINDLAR, Heribert, 44795 Bochum (DE); NICOLAUS, Karsten, 58119 Hagen (DE); SPANNER, Alexander, 40764 Langenfeld (DE); KAPPES, Bernd, 40885 Ratingen (DE)
(74) Vertreter: Schulte & Schulte

(56) Entgegenhaltungen:
- EP-A1- 0 590 553
- EP-A1- 1 021 670
- EP-A1- 2 185 842
- CH-A5- 637 458
- DE-A1- 2 005 637
- GB-A- 764 704
- JP-A- 2013 079 685
- US-A- 4 632 148
- US-A1- 2004 050 432

## Beschreibung

Die Erfindung betrifft eine Vorrichtung zur Steuerung der Verteilung von Waschwasser auf mehrere Abnehmer in einem Fahrzeug.

DE 20 05 637 A1 offenbart eine solche Vorrichtung gemäß dem Oberbegriff des Anspruchs 1.

In Fahrzeugen, speziell im Automotivebereich gibt es mehrere Abnehmer für Waschwasser, z. B. für die Windschutz- oder die Heckscheibe oder die Scheinwerfer. Zukünftig wird die Zahl dieser Verbraucher sogar noch zunehmen, weil weitere Einrichtungen in einem Fahrzeug regelmäßiges Säubern mit Waschwasser erfordern, so Kameras, Sensoren etc.. Dieser Bedarf wird mit der Tendenz zum autonomen Fahren noch zunehmen. Derzeit wird jeder Abnehmer von einer separaten Vorrichtung mit Waschwasser versorgt, was zugleich bedeutet, dass Aggregate wie Tanks, Pumpen, Motoren, Steuerungen oder Sensoren vielfach vorhanden sind. Dies ist nicht nur mit hohen Kosten, sondern auch mit dem Nachteil verbunden, dass von dem ohnehin knappen Platz in einem modernen Fahrzeug weiterer verloren geht.

Insofern stellt sich der vorliegenden Erfindung die Aufgabe, eine Vorrichtung zur Steuerung und Verteilung von Waschwasser auf mehrere Abnehmer in einem Fahrzeug zu schaffen, welche sich durch besondere Kompaktheit und eine minimale Anzahl von Aggregaten auszeichnet.

Diese Aufgabe wird dadurch gelöst, dass die Vorrichtung einen Waschwasserzulauf und eine Mehrzahl von mit dem Waschwasserzulauf koppelbaren und zu den verschiedenen Abnehmern führenden Waschwasserabläufen aufweist.

Wird Waschwasser an einem Verbraucher, d. h. an der Windschutz- oder Heckscheibe, einem Scheinwerfer, einer Kamera etc. benötigt, erfolgt eine Verbindung bzw. Kopplung zwischen dem vorrichtungsseitigen Waschwasserzulauf und dem betreffenden Waschwasserablauf, der Wasserweiche, der zu dem einschlägigen Abnehmer bzw. Verbraucher führt. Damit ist eine Vorrichtung realisiert, welche dank der zentralen und nach Möglichkeit pro Fahrzeug nur noch einfach vorhandenen Aggregate besonders kompakt bauen kann.

Der jeweilige Waschwasserablauf ist in Abhängigkeit von der Stellung eines in dem Gehäuse der Vorrichtung angeordneten Rotationskörpers mit dem Waschwasserzulauf koppelbar. D. h. die Drehung bzw. Ausrichtung des Rotationskörpers ist mit den Waschwasserabläufen synchronisiert. Stehen der Waschwasserzulauf und der betreffende, zu dem gewünschten Verbraucher führende Ablauf in Verbindung, weil der Rotationskörper die entsprechende Position eingenommen hat, wird das Waschwasser entsprechend präzise verteilt.

Erfindungsgemäß sieht dies so aus, dass in den Rotationskörper ein Kanal integriert ist, über welchen der Waschwasserzulauf in Abhängigkeit von der Stellung des Rotationskörpers mit dem jeweiligen Waschwasserablauf koppelbar ist. Dieser z. B. im weiteren Sinne U-förmige Kanal ist Bestandteil des Rotationskörpers.

Vorgesehen ist dabei, dass der Kanal sich in radialer oder in axialer Richtung des Rotationskörpers erstreckt und auf diese Weise die Verbindung zwischen dem Waschwasserzulauf und dem jeweils mit diesem zu koppelnden Waschwasserablauf herstellen kann.

Eine weitere Ausführungsform der Erfindung sieht vor, dass das Gehäuse der Wasserweiche eine Anschlussplatte aufweist, an deren Außenseite der Waschwasserzulauf und die Waschwasserabläufe vorgesehen sind. Diese Anschlussplatte bildet den äußeren Abschluss des Gehäuses und ist gegenüber dem Rotationskörper abgedichtet. Der Zulauf sowie die zahlreichen Abläufe gruppieren sich im Bereich dieser Anschlussplatte, wobei der dahinter positionierte Rotationskörper mit seiner jeweiligen Positionierung vorgibt, mit welchem Ablauf der Zulauf gerade in Verbindung steht.

Dass auf der Anschlussplatte der Waschwasserzulauf zentral und die Waschwasserabläufe kranzartig um den Waschwasserzulauf in radialer Richtung verteilt angeordnet ist, korrespondiert mit der Ausbildung des Rotationskörpers bzw. dem in diesem integrierten Kanal. In der Art eines Revolvermagazins kann damit der Waschwasserzulauf mit den diversen Abläufen gekoppelt werden.

Je nach Ausführungsform ist es denkbar, dass der Waschwasserzulauf und die Waschwasserabläufe auf derselben Seite und/oder auf der gegenüber liegenden Seite des Gehäuses der Wasserweiche vorgesehen sind. Erstgenannte Fassung der Erfindung bezieht sich auf die oben bereits vorgestellte Lösung mit einem zentralen Waschwasserzulauf und kranzartig darum positionierten Waschwasserabläufen, während sich letztgenannte Fassung der Erfindung auf ein Gehäuse bezieht, das auf der Vorderseite einen Waschwasserzulauf und auf der Rückseite mehrere Waschwasserabläufe vorsieht, über die dann jeweils die Verbindung zu einem Waschwasserspeicher bzw. den Verbrauchern hergestellt wird. Die Abläufe können sich auch auf Vorder- und Rückseite verteilen.

Es gibt eine Alternative für eine Ausbildung von Gehäuse und/oder Rotationskörper zu der zuvor beschriebenen Verteilung der Waschwasserabläufe in radialer Richtung, wenn nämlich die Waschwasserabläufe in dem Gehäuse in einer Reihe angeordnet sind, das dazu eine längliche Form aufweist, was damit einhergeht, dass der Kanal sich in axialer Richtung, bezogen auf Gehäuse und Rotationskörper, erstreckt.

Dies sieht konkret so aus, dass der Kanal in in radialer Richtung verlaufende Bohrungen mündet, welche mit den Waschwasserabläufen korrespondieren. D. h. von dem in axialer Richtung verlaufenden Kanal erstrecken sich in radialer Richtung Bohrungen. Voraussetzung dafür, dass das in einem Speicher vorgehaltene Waschwasser vom Zulauf durch den betreffenden Ablauf und damit in Richtung Verbraucher freigesetzt werden kann, ist, dass die Radialbohrung des Kanals und der jeweilige Waschwasserablauf miteinander fluchten bzw. so korrespondieren, dass das Wasser aus dem Kanal durch die Bohrung in den Ablauf gelangen kann.

Dass die Bohrungen in dem Rotationskörper in radialer Richtung versetzt zueinander angeordnet sind, ermöglicht dann, dass jeweils eine Radialbohrung des Kanals und ein Waschwasserablauf miteinander fluchten, wenn Medium fließen soll. Weil eben die Waschwasserabläufe auf dem Gehäuse in Reihe positioniert sind bei dieser Variante der Erfindung, müssen die Bohrungen in dem Kanal in radialer Richtung in Art einer Kulisse versetzt zueinander sein, sodass die Drehung des Rotationskörpers auch zu den entsprechenden Überdeckungen zwischen Radialbohrung und Waschwasserablauf führt.

Es wurde bereits angesprochen, dass diverse Aggregate dank der zentralen Ausbildung der erfindungsgemäßen Vorrichtung eingespart werden können. So empfiehlt es sich z. B., dass in dem Gehäuse der Wasserweiche ein Elektromotor und/oder ein Steuergerät für den Rotationskörper angeordnet sind. Das Steuergerät kann ein oder auch zwei Elektromotoren sowie Heizkreise ansteuern. Denkbar ist der Einsatz von DC- oder EC-Elektromotoren. Vorteilhaft ist bei einem EC-Motor, dass dieser von sich aus in der Lage ist festzustellen, in welcher Position sich der Rotationskörper aktuell befindet und somit ohne einen separaten Positionssensor auskommt. Außerdem können auch lernende Algorithmen zur Optimierung der Abläufe im Rahmen der Steuerung hinterlegt werden.

Eine verbesserte Ausführungsform der Erfindung sieht vor, dass das Steuergerät über eine Kommunikationsschnittstelle mit dem Fahrzeug vernetzt ist, womit ebenfalls weitere Vorteile verbunden sind. So kann über den Datenaustausch z. B. der Stand von Scheibenwischern, die Funktionsfähigkeit einer Pumpe oder die Aufrechterhaltung der Strömungsverhältnisse abgefragt und diagnostiziert werden.

Wenn der Elektromotor und/oder der Rotationskörper in beide Richtungen drehbar ausgebildet ist, können insbesondere benachbarte Waschwasserabläufe direkt und folglich schneller angesprochen werden, sodass sich die Wege bei der Ausrichtung des Rotationskörpers entscheidend verkürzen.

Erfindungsgemäß ist weiter vorgesehen, dass als Antrieb für den Rotationskörper ein Direktantrieb, ein Getriebe und/oder ein Schneckengetriebe dient. Letzteres entspricht einer Ausführungsform, bei der das Schneckengetriebe mit einem dem Rotationskörper zugeordneten Zahnkranz zur Übertragung der Drehmomente korrespondiert.

Es empfiehlt sich ferner, dass in das Gehäuse mindestens ein Positionssensor zur Ermittlung und/oder Kalibration der Position des Rotationskörpers integriert ist. Gerade bei einer aus einem Nass- und einem Trockenbereich bestehenden Vorrichtung erfolgt die Erkennung durch den Übergang zwischen den beiden Bereichen. Der Sensor zum Auswerten ist dabei auf der Trockenseite positioniert. Zur Einsparung einer Verkabelung kann der Sensor auch direkt auf der Leiterplatte der Steuerung angebracht sein.

Ergänzend dazu ist vorgesehen, dass die Positionserkennung des Rotationskörpers über das Zusammenspiel eines Sensors und eines Magneten erfolgt. Bei dieser Variante ist der Magnet dem Rotationskörper und der Sensor der Steuerung im Trockenbereich zugeordnet. Der Sensor kann dabei die Lage des Magnetfeldes erkennen. Über den Sensor werden die Drehungen des Rotationskörpers, respektive dessen Positionierung über den Magneten erfasst bzw. gesteuert.

Eine weitere bevorzugte Ausführungsform der Erfindung sieht vor, dass die Drehzahl- und/oder Drehrichtungserkennung des Rotationskörpers über die Auswertung von Rippelstrom erfolgt. Dies gewährleistet eine sanften Anlauf und eine exakte Positionsansteuerung in Verbindung mit der Kopplung des Waschwasserzulaufs mit dem jeweiligen Ablauf.

Alternativ dazu wird vorgeschlagen, dass die Positionierung des Rotationskörpers über eine Geschwindigkeits- und/oder Verfahrwegregelung erfolgt. Auch dies versteht sich als Möglichkeit eines sanften Annäherns an die jeweilige dem gekoppelten Zustand entsprechende Endposition zwischen Zu- und Ablauf.

Ohne Vorsehen eines Sensors ist es zweckmäßig, wenn die Positionserkennung des Rotationskörpers durch eine 3D-Rastkurve erfolgt. Beim Verlassen einer definierten Position wird durch die 3D-Rastkurve ein deutlich höherer Strom benötigt. Danach setzt eine Periode mit gleichbleibend geringerem Strom ein. Die exakte Ausrichtung der neuen Position übernimmt dann die 3D-Rastkurve bei dieser Ausführungsform.

Eine weitere Komponente, welche dank der erfindungsgemäßen Vorrichtung vielfach eingespart werden kann, ist ein Heizsystem, wenn nämlich die Vorrichtung mit einer Einrichtung zum Aufheizen des Waschwassers ausgerüstet ist. Dabei gewährleistet die erfindungsgemäße Vorrichtung mit der Heizeinrichtung, dass nur Waschwasser in den zu dem jeweiligen Verbraucher führenden Ablauf gelangen kann, das unter Berücksichtigung der Entfernung zwischen erfindungsgemäßer Vorrichtung und Abnehmer eine einstellbare und Vereisungen ausschließende Minimaltemperatur aufweist.

In diesem Zusammenhang ist es dann auch hilfreich, wenn in dem Gehäuse mindestens ein Sensor zur Ermittlung der Wassertemperatur vorgesehen ist, der im Zusammenspiel mit der Steuerung dann eben dieses von Vereisungen freie Waschwasser gewährleistet.

Es wurde bereits angesprochen, dass es zweckmäßig ist, wenn das Gehäuse über einen Nassbereich und einen Trockenbereich verfügt, wobei die Schnittstelle zwischen beiden Bereichen abgedichtet ist. Dem Nassbereich ist dabei insbesondere der Rotationskörper, dem Trockenbereich sind Steuerung, Leiterplatte, Antriebseinheit, Sensoren zur Auswertung der Positionserkennung, Signalgeber zur Positionserkennung, Sensoraufnahme, Ansteuerungen der Aktoren, Auswertung von Sensoren für die Fahrzeuganbindung etc. zugeordnet. Dabei bilden in vorteilhafter Weise der Elektromotor und der Rotationskörper separate Einheiten, die in einem Fügeprozess zusammengebaut werden können. Die Schnittstelle zwischen Motor und Rotationskörper wird beim Fügen automatisch mit abgedichtet.

Dass auch nur eine Pumpe vorgesehen sein muss, die sämtliche Verbraucher versorgen kann, wurde bereits angesprochen. Ergänzend ist vorgesehen, dass mindestens eine einem Waschwasserablauf zugeordnete Pumpe über das Steuergerät bidirektional ansteuerbar ausgebildet ist. Diese Pumpe versorgt den Tank der Wasserweiche gleichzeitig mit Waschwasser. Neben einer Druck- umfasst solch eine Pumpe auch eine Saugfunktion.

Dies ist dann etwa in dem Zusammenhang sinnvoll, dass die Vorrichtung mit einer Einrichtung zur Rückführung von Tauwasser aus der Klimaanlage und/oder für aufgefangenes Regenwasser versehen bzw. verbunden ist. So kann z. B. Tauwasser aus der Klimaanlage dem Waschwassersystem zur Verfügung gestellt werden. Alternativ oder ergänzend dazu kann aufgefangenes Regenwasser ggf. nach geeigneter Filterung und/oder Aufbereitung dem Waschwassersystem wieder zugeführt werden.

Eine weitere vorteilhafte Ausführungsform der Erfindung sieht vor, dass die Vorrichtung mit einer Einrichtung zur Messung der Konzentration von Frostschutzmittel in dem Waschwasser ausgerüstet ist, um entsprechenden Vereisungen in der kalten Jahreszeit effektiv entgegenwirken zu können.

Die Erfindung zeichnet sich insbesondere dadurch aus, dass eine Vorrichtung zur Steuerung der Verteilung von Waschwasser auf mehrere Abnehmer in einem Fahrzeug geschaffen ist, die ein völlig neues Management des Waschwassers über eine Wasserweiche ermöglicht. Maßgebliche Bedeutung kommt dabei einem in einem Gehäuse der Vorrichtung positionierten angetriebenen Rotationskörper zu. Dessen Rotation ist abgestimmt auf die Stellung eines von einem Speicher versorgten Waschwasserzulaufs zu einer Vielzahl von Waschwasserabläufen in Richtung Verbrauchern wie Scheibenwischern, Kameras etc.. Dabei wird der Zulauf mit dem zu beanspruchten Abnehmer/Verbraucher korrespondierenden Waschwasserablauf gekoppelt, d. h. verbunden, sodass Wasser fließen kann. Gilt es einen neuen Abnehmer/Verbraucher mit Waschwasser aus einem Speicher zu dessen Vorhaltung zu versorgen, erfolgt dies über das Steuergerät und der durch dieses Gerät ausgelösten Verdrehung des Rotationskörpers in die entsprechende Position. Die Erfindung umfasst dabei zwei Varianten. Nach einer ersten ist der Waschwasserzulauf zentral positioniert und je nach Positionierung des Rotationskörpers gelangt das Waschwasser vom Zulauf in radialer Richtung zu dem zu dem relevanten Abnehmer führenden Anschluss, während nach der zweiten Variante Gehäuse und Rotationskörper eine längliche Form aufweisen und der Kanal den Rotationskörper in axialer Richtung durchschreitet, wobei über radiale Bohrungen der Kontakt zwischen Kanal und Waschwasserabläufen hergestellt wird. Aggregate wie Tank, Pumpe, Steuerung, Antrieb oder Sensorik müssen zukünftig nur noch ein einziges Mal vorhanden sein, weil sämtliche Abnehmer zentral über die erfindungsgemäße Vorrichtung mit Waschwasser versorgt werden können.

Weitere Einzelheiten und Vorteile des Erfindungsgegenstandes ergeben sich aus der nachfolgenden Beschreibung der zugehörigen Zeichnung, in der ein bevorzugtes Ausführungsbeispiel mit den dazu notwendigen Einzelheiten und Einzelteilen dargestellt ist. Es zeigen:
- Figur 1: ein Gehäuse in Draufsicht,
- Figur 2: ein Gehäuse in Seitenansicht, teilweise im Schnitt,
- Figur 3: eine Variante zu Figur 1,
- Figur 4: eine Variante zu Figur 2,
- Figur 5: ein Gehäuse mit Abläufen in Reihe in Seitenansicht,
- Figur 6: das Gehäuse nach Figur 5 in Draufsicht und
- Figur 7: einen Rotationskörper.

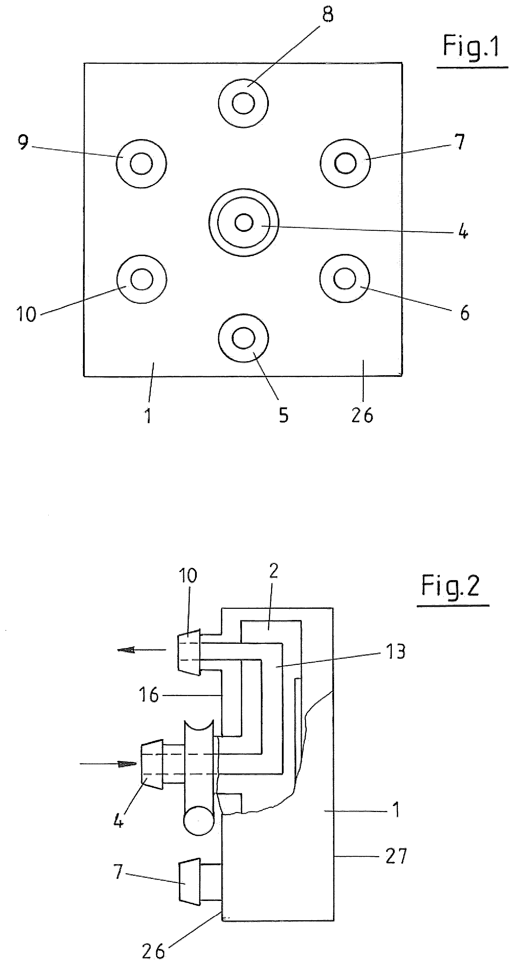

Figur 1 zeigt ein Gehäuse 3 der Vorrichtung/Wasserweiche 1, bei dem besonders gut die Anschlussplatte 16 mit dem zentralen Waschwasserzulauf 4 und den darum kranzartig gruppierten Waschwasserabläufen 5 - 10 erkennbar ist. Je nach Positionierung des in dem Gehäuse 3 hinter der Anschlussplatte 16 verborgenen Rotationskörpers steht der zentrale, von einem hier nicht gezeigten Waschwasserspeicher versorgte Waschwasserzulauf 4 mit dem jeweiligen Waschwasserablauf 5 - 10 in Verbindung, sodass das Waschwasser zu dem jeweiligen Verbraucher gelangen kann. Zulauf 4 und Abläufe 5 - 10 weisen dazu entsprechende Anschlüsse auf oder sind als solche ausgebildet, um über Leitungen mit den Verbrauchern verbunden werden zu können.

Das Innenleben des teilweise geschnitten dargestellten Gehäuses 3 zeigt nun Figur 2. Besonderes Augenmerk gilt dabei dem Rotationskörper 2 im Nassbereich der Wasserweiche 1. Der Rotationskörper 2 wird über einen hier nicht dargestellten Motor angetrieben, ein Schneckengetriebe 18 steht mit einem Zahnkranz 28 des Rotationskörpers 2 so in Kontakt, dass Drehmomente in beide Richtungen übertragen werden können, um die Wege zwischen den einzelnen Waschwasserabläufen zu verkürzen. Der Rotationskörper 2 weist an seiner der Abschlussplatte 16 zugewandten Vorderseite 26 einen im weitesten Sinne U-förmig ausgebildeten Kanal 13 auf, welcher die Verbindung zwischen dem Zulauf 4 und dem jeweiligen Ablauf, hier ist es der mit dem Bezugszeichen 10 versehene, herstellt, so dass Waschwasser über den Ablauf 10 letztlich zu dem diesem zugeordneten Abnehmer gelangen kann. Das Drehen des Rotationskörpers 2 gibt also über den Kanal 13 vor, mit welchem Ablauf 5 - 10 der Zulauf 4 jeweils gekoppelt ist, d. h. in Verbindung steht. Über den Sensor 20 werden die Drehungen des Rotationskörpers 2, respektive dessen Positionierung über den Magneten 21 erfasst bzw. gesteuert.

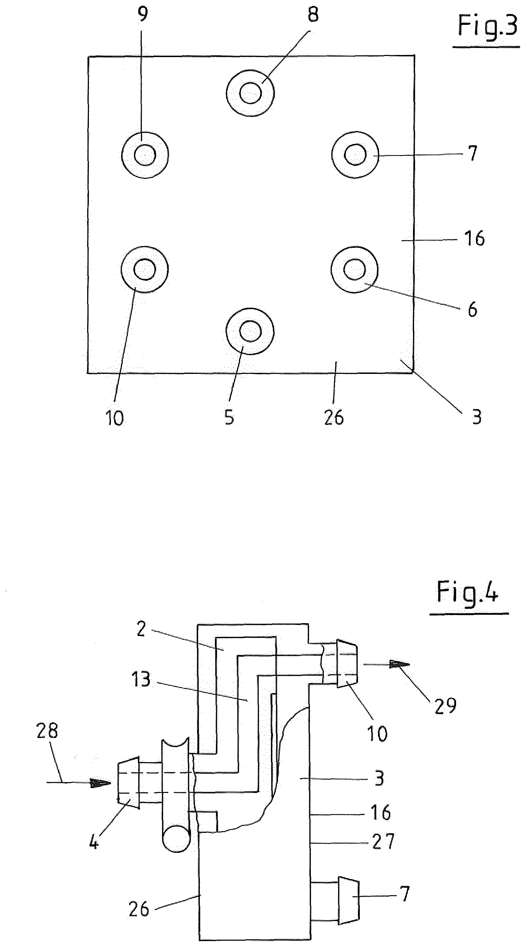

Maßgeblicher Unterschied dazu ist in Figur 3 der auf der Vorderseite 26 fehlende zentrale Waschwasserzulauf, stattdessen sind nur sechs Abläufe auf der Vorderseite 26 mit der Anschlussplatte 16 des Gehäuses 3 vorhanden.

Wie dann Figur 4 illustriert, sind bei der in den Figuren 3 und 4 gezeigten Varianten der Erfindung Waschwasserzulauf 4 einerseits und die Waschwasserabläufe 5 - 10 andererseits auf unterschiedlichen Seiten 26, 27 des Gehäuses 3 positioniert. Symbolisiert durch den Pfeil 28 gelangt das Wasser durch den zentralen Waschwasserzulauf 4 in das Gehäuse 3, genauer gesagt in den Rotationskörper 2 mit dem Kanal 13, über den die Verbindung zwischen dem Zulauf 4 und den Abläufen, von denen hier zwei beispielhaft mit den Bezugszeichen 7 und 10 versehen sind. Letzterer steht in der Darstellung nach Figur 4 in Kontakt mit dem Anschluss, d. h. das Wasser kann fließen, symbolisiert durch den Pfeil 29.

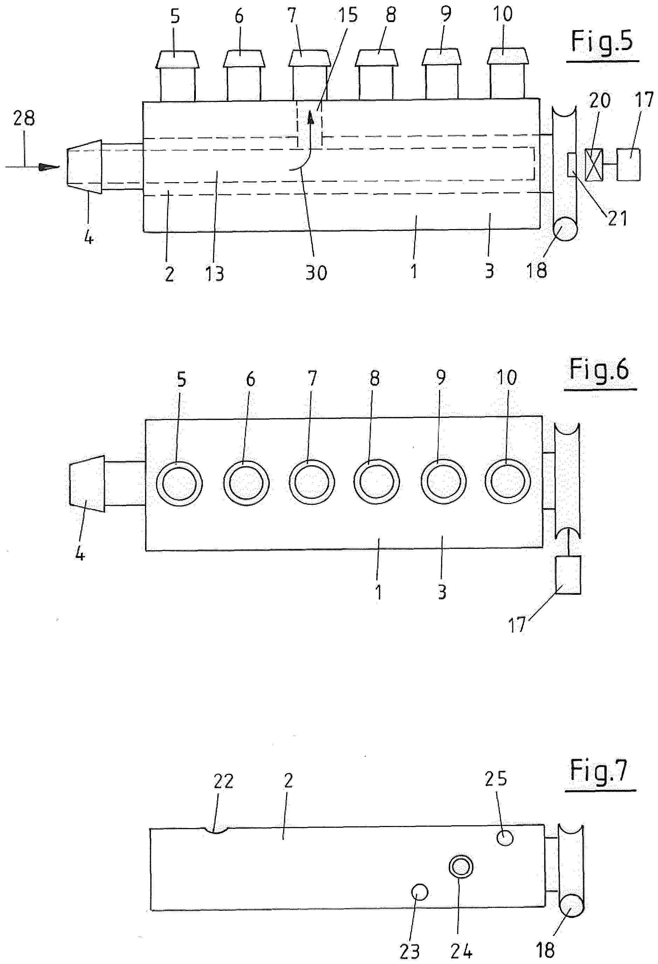

Die Figuren 5, 6 und 7 zeigen die Variante der Erfindung mit dem länglichen Gehäuse 3. Wiederum symbolisiert durch den Pfeil 28 gelangt das Waschmedium durch den Zulauf 4 in den Kanal 13 in dem Rotationskörper 2 in dem Gehäuse 3. Sechs Anschlüsse für den Waschwasserablauf sind in Reihe positioniert. In der Darstellung gemäß Figur 5 gelangt das Wasser dann, symbolisiert durch den Pfeil 30, und den Zulauf 15 zum Ablauf 7, wo z. B. ein zu dem entsprechenden Verbraucher führender Schlauch befestigt sein kann. Der Sensor 20 steht im Zusammenspiel mit dem Magneten 21 zur Feststellung der Positionierung des Rotationskörpers 2. Der nicht gezeigte Motor, der prinzipiell sowohl im Trockenals auch im Nassbereich der Vorrichtung eingebaut werden könnte, wird über das Steuergerät 17 mit einer Leiterplatte angesprochen.

Figur 6 zeigt das Gehäuse 3 der Vorrichtung 1 mit den sechs Abflüssen 5 - 10 in Draufsicht.

Schließlich zeigt Figur 7 einen Rotationskörper 2 mit vier beispielhaften, als Auslass dienenden Bohrungen 22 - 25, welche sich, über den Rotationskörper 2 verteilt, erstrecken. Die Positionierung dieser Bohrungen 22 - 25 etc. gibt vor, welche der jeweiligen Bohrungen so mit einem Abfluss in dem hier nicht dargestellten Gehäuse in Verbindung steht, dass Wasser zwischen Zu- und Ablauf fließen kann.

## Patentansprüche

1. Vorrichtung (1) zur Steuerung der Verteilung von Waschwasser auf mehrere Abnehmer in einem Fahrzeug, wobei die Vorrichtung (1) einen Waschwasserzulauf (4) und eine Mehrzahl von mit dem Waschwasserzulauf (4) koppelbaren und zu den verschiedenen Abnehmern in dem Fahrzeug führenden Waschwasserabläufen (5 - 10) aufweist,
wobei der jeweilige Waschwasserablauf (5 - 10) in Abhängigkeit von der Stellung eines in dem Gehäuse (3) der Vorrichtung (1) angeordneten Rotationskörpers (2) mit dem Waschwasserzulauf (4) koppelbar ist,
**dadurch gekennzeichnet,**
**dass** in den Rotationskörper (2) ein Kanal (13) integriert ist, über welchen der Waschwasserzulauf (4) in Abhängigkeit von der Stellung des Rotationskörpers (2) mit dem jeweiligen Waschwasserablauf (5 - 10) koppelbar ist.

2. Vorrichtung nach Anspruch 1, **dadurch gekennzeichnet,**
**dass** der Kanal (13) sich in radialer oder in axialer Richtung des Rotationskörpers (2) erstreckt.

3. Vorrichtung nach Anspruch 1,
**dadurch gekennzeichnet,**
**dass** das Gehäuse (3) eine Anschlussplatte (16) aufweist, an deren Außenseite der Waschwasserzulauf (4) und die Waschwasserabläufe (5 - 10) vorgesehen sind.

4. Vorrichtung nach Anspruch 3,
**dadurch gekennzeichnet,**
**dass** auf der Anschlussplatte (16) der Waschwasserzulauf (4) zentral und die Waschwasserabläufe (5 - 10) kranzartig um den Waschwasserzulauf (4) in radialer Richtung verteilt angeordnet ist.

5. Vorrichtung nach Anspruch 1,
**dadurch gekennzeichnet,**
**dass** der Waschwasserzulauf (4) und die Waschwasserabläufe (5 - 10) auf derselben Seite (26) und/oder auf der gegenüber liegenden Seite (27) des Gehäuses (3) vorgesehen sind.

6. Vorrichtung nach Anspruch 1,
**dadurch gekennzeichnet,**
**dass** die Waschwasserabläufe (5 - 10) in dem Gehäuse (3) in einer Reihe angeordnet sind.

7. Vorrichtung nach Anspruch 6, **dadurch gekennzeichnet,**
**dass** der Kanal (13) in in radialer Richtung verlaufende Bohrungen (22 - 25) mündet, welche mit den Waschwasserabläufen (5 - 10) korrespondieren.

8. Vorrichtung nach Anspruch 7, **dadurch gekennzeichnet,**
**dass** die Bohrungen (22 - 25) in radialer Richtung versetzt zueinander angeordnet sind.

9. Vorrichtung nach Anspruch 1,
**dadurch gekennzeichnet,**
**dass** in dem Gehäuse (3) ein Elektromotor und/oder ein Steuergerät (17) für den Rotationskörper (2) angeordnet sind, wobei das Steuergerät (17) über eine Kommunikationsschnittstelle mit dem Fahrzeug vernetzt ist.

10. Vorrichtung nach Anspruch 9, **dadurch gekennzeichnet,**
**dass** der Elektromotor und/oder der Rotationskörper (2) in beide Richtungen drehbar ausgebildet ist.

11. Vorrichtung nach Anspruch 1,
**dadurch gekennzeichnet,**
**dass** als Antrieb für den Rotationskörper (2) ein Direktantrieb, ein Getriebe oder ein Schneckengetriebe (18) dient.

12. Vorrichtung nach Anspruch 1,
**dadurch gekennzeichnet,**
**dass** in das Gehäuse (3) mindestens ein Positionssensor (20) zur Ermittlung und/oder Kalibration der Position des Rotationskörpers (3) integriert ist.

13. Vorrichtung nach Anspruch 1,
**dadurch gekennzeichnet,**
**dass** die Vorrichtung mit einer Einrichtung zum Aufheizen des Waschwassers ausgerüstet ist.

14. Vorrichtung nach Anspruch 1,
**dadurch gekennzeichnet,**
**dass** in dem Gehäuse (3) mindestens ein Sensor zur Ermittlung der Wassertemperatur vorgesehen ist.

## Claims

1. Device (1) for controlling the distribution of washing water to several consumers in a vehicle, the device (1) having a washing water inlet (4) and a plurality of washing water drains (5 - 10) that can be coupled with the washing water inlet (4) and that lead to the various consumers in the vehicle, whereby the respective washing water drain (5 - 10) can be coupled with the washing water inlet (4), depending on the position of a rotating body (2) arranged in the housing (3) of the device (1)
**characterised in that**
a channel (13) is integrated in the rotating body (2) through which the washing water inlet (4) can be coupled with the respective washing water drain (5 - 10) depending on the position of the rotating body (2).

2. Device according to claim 1,
**characterised in that**
the channel (13) extends in the radial or axial direction of the rotating body (2).

3. Device according to claim 1,
**characterised in that**
the housing (3) has a connecting plate (16), on the outside of which the washing water inlet (4) and the washing water drains (5 -10) are provided.

4. Device according to claim 3,
**characterised in that**
the washing water inlet (4) is arranged centrally on the connection plate (16) and the washing water drains (5 - 10) are arranged in a circle around the washing water inlet (4) in a radial direction.

5. Device according to claim 1,
**characterised in that**
the washing water inlet (4) and the washing water drains (5-10) are provided on the same side (26) and / or on the opposite side (27) of the housing (3).

6. Device according to claim 1,
**characterised in that**
the washing water drains (5 - 10) are arranged in a row in the housing (3).

7. Device according to claim 6,
**characterised in that**
the channel (13) flows into boreholes running in a radial direction (22 - 25) that correspond with the washing water drains (5 - 10).

8. Device according to claim 7,
**characterised in that**
the holes (22 - 25) are arranged in a radial direction offset to each other.

9. Device according to claim 1,
**characterised in that**
an electric motor and / or a control unit (17) for the rotating body (2) are arranged in the housing (3), whereby the control unit (17) is connected to the vehicle via a communication interface.

10. Device according to claim 9,
**characterised in that**
the electric motor and / or the rotating body (2) is rotatable in both directions.

11. Device according to claim 1,
**characterised in that**
a direct drive, a gearbox or a worm gear (18) is used as a drive for the rotating body (2).

12. Device according to claim 1,
**characterised in that**
at least one position sensor (20) is integrated into the housing (3) to determine and /or calibrate the position of the rotating body (3).

13. Device according to claim 1,
**characterised in that**
the device is equipped with a device for heating the washing water.

14. Device according to claim 1,
**characterised in that**
at least one sensor is provided in the housing (3) to determine the water temperature.

## Revendications

1. Dispositif (1) destiné à répartir l'eau de lavage sur plusieurs utilisateurs dans un véhicule, sachant que le dispositif (1) présente une admission d'eau de lavage (4) et plusieurs écoulements d'eau de lavage (5 - 10) pouvant être accouplés avec l'admission d'eau de lavage (4) et menant aux différents utilisateurs dans le véhicule, sachant que chaque écoulement d'eau de lavage (5 - 10) peut être accouplé à l'admission d'eau de lavage (4) en fonction de la position d'un corps de rotation (2) disposé dans le boîtier (3) du dispositif (1),
**caractérisé par le fait**
**qu'**un canal (13) est intégré dans le corps de rotation (2), par l'intermédiaire duquel l'admission d'eau de lavage (4) peut être accouplée avec chaque écoulement de l'eau de lavage (5 - 10) en fonction de la position du corps de rotation (2).

2. Dispositif selon la rotation 1,
**caractérisé par le fait**
**que** le canal (13) s'étend dans le sens radial ou axial du corps de rotation (2).

3. Dispositif selon la rotation 1,
**caractérisé par le fait**
**que** le boîtier (3) présente une plaque de raccordement (16), sur la face extérieure de laquelle sont prévus l'admission d'eau de lavage (4) et les écoulements d'eau de lavage (5 - 10).

4. Dispositif selon la rotation 3,
**caractérisé par le fait**
**que** sur la plaque de raccordement (16), l'admission d'eau de lavage (4) est disposée de façon centrale, et les écoulements d'eau de lavage (5 - 10) à la manière d'une couronne autour de l'admission d'eau de lavage (4) dans le sens radial.

5. Dispositif selon la rotation 1,
**caractérisé par le fait**
**que** l'admission d'eau de lavage (4) et les écoulements d'eau de lavage (5 - 10) sont prévus du même côté (26) et/ou sur le côté opposé (27) du boîtier (3).

6. Dispositif selon la rotation 1,
**caractérisé par le fait**
**que** les écoulements d'eau de lavage (5 - 10) sont disposés en série dans le boîtier (3).

7. Dispositif selon la rotation 6,
**caractérisé par le fait**
**que** le canal (13) débouche dans des trous courant dans le sens radial (22 - 25), qui correspondent aux écoulements d'eau de lavage (5 - 10).

8. Dispositif selon la rotation 7,
**caractérisé par le fait**
**que** les trous (22 - 25) sont disposés décalés les uns par rapport aux autres dans le sens radial.

9. Dispositif selon la rotation 1,
**caractérisé par le fait**
**qu'**un moteur électrique et/ou un appareil de commande (17) pour le corps de rotation (2) sont disposés dans le boîtier (3), sachant que l'appareil de commande (17) est relié en réseau au véhicule par l'intermédiaire d'une interface de communication.

10. Dispositif selon la rotation 9,
**caractérisé par le fait**
**que** le moteur électrique et/ou le corps de rotation (2) est conçu de façon rotative dans les deux sens.

11. Dispositif selon la rotation 1,
**caractérisé par le fait**
**qu'**un entraînement direct, un moteur ou un entraînement à vis sans fin (18) sert d'entraînement au corps de rotation (2).

12. Dispositif selon la rotation 1,
**caractérisé par le fait**
**que** dans le boîtier (3) au moins un capteur de position (20) est intégré pour déterminer et/ou calibrer la position du corps de rotation (3).

13. Dispositif selon la rotation 1,
**caractérisé par le fait**
**que** le dispositif est équipé d'un équipement destiné à chauffer l'eau de lavage.

14. Dispositif selon la rotation 1,
**caractérisé par le fait**
**que** dans le boîtier (3) est prévu au moins un capteur destiné à déterminer la température de l'eau.
